# EUROPEAN PATENT APPLICATION

(11) **EP 0 564 070 A1**
(43) Date of publication of application: **06.10.1993**
(21) Application number: 93300591.0
(22) Date of filing: 27.01.1993
(51) Int. Cl.: G01N 29/18, G01S 1/02

(54) **Apparatus for monitoring a fluid medium**

(30) Priority: 03.04.1992 GB 9207354
(71) Applicant: GEC-MARCONI LIMITED, Stanmore, Middlesex HA7 4LY (GB)
(72) Inventor: Brierley, Crofton John, Pattishall, Northamptonshire NN12 8JU (GB); Trundle, Clive, Towcester, Northants NN12 8UR (GB); Whatmore, Roger William, Bletchley, Milton Keynes MK3 7QR (GB)
(74) Representative: Pope, Michael Bertram Wingate

(57) **Abstract**

This invention relates to an an apparatus for monitoring a fluid medium comprising a piezoelectric element provided with a layer including an absorbent material or a catalyst material. The apparatus further includes means for generating a Surface Skimming Bulk Wave for propagation along said piezoelectric element, said layer being capable of confining said wave to said element and being capable of changing its acoustic properties in response to absorption thereby and retention therein by chemical linkage of one or more analytes from the fluid medium or in response to chemical and/or physical changes in the fluid medium and means for monitoring changes in the propagated acoustic Wave caused by changes in the acoustic properties of said layer.

## Description

This invention relates to an apparatus for monitoring a fluid medium.

The rapidly growing awareness of environmental issues and in particular, the need to increase water supply standards around the world, has meant there is a requirement for a wide range of sensors specific to water pollutants and which are capable of responding to changes in water purity in real time. Such sensors will find applications at the out flows from industrial sites and sewage plants, within rivers and reservoirs and at the point of delivery to customers.

Also, many large volume industrial chemcial processes use catalysts, although not consumed, their efficiency with time will decline and will need regenerating or replacing. The sensor described below will monitor the progress of the reaction and will indicate the efficiency of the catalyst in use. If placed in the outflow, it will monitor the quality of the product by detecting any residual reactions occurring, indicating incomplete conversion.

A problem which occurs with known sensors is that considerable penetration occurs of the acoustic wave into the environment to be sensed. If the environment is gaseous this problem is not unduly onerous. However, if the environment is liquid then the penetration of the wave into the environment causes considerable damping. This in turn reduces the sensitivity of the device. The present invention mitigates this problem.

According to the invention there is provided an apparatus for monitoring a fluid medium comprising a piezoelectric element provided with a layer including an absorbent material or a catalyst material, means for generating an acoustic Surface Skimming Bulk Wave for propagation along said piezoelectric element, said layer being capable of confining said Wave to said element and being capable of changing its acoustic properties in response to absorption thereby and retention therein by chemical linkage of one or more analytes from the fluid medium or in response to chemical and/or physical changes in the fluid medium and means for monitoring changes in the propagated Wave caused by changes in the acoustic properties of said layer.

In an apparatus embodying this invention the absorbent material is an ion exchange material which forms the chemical linkage with selective analyte or analytes in the fluid medium, said analyte or analytes being heavy metal ions.

Preferably the absorbent material is a zeolite material or derivitised polyester.

In an apparatus embodying the invention for monitoring a chemical reaction taking place in said fluid medium, the monitored changes in the propagated wave indicate the state of the catalyst. The catalyst may be a zeolite catalyst or a palladium matrix catalyst.

One embodiment of the invention is directed to an apparatus capable of detecting certain pollutants in water systems in which heavy metal contaminants that are a known concern in water systems are absorbed by the absorbent material. The absorbent material for example, a zeolite material, is an ion exchange material which forms chemical linkage with heavy metal cations. The absorption of the metal ions causes changes in the acoustic properties of the absorbant medium (Alumino-Silicate Zeolite)/piezoelectric element combination and this is monitored by the propagation of an acoustic Love wave along the surface of the piezoelectric crystal element. The acoustic velocity of the wave is modified by the ion absorbant medium and this is monitored as a change of phase or frequency at the output transducer of the acoustic element.

According to another embodiment of the invention the apparatus is capable of monitoring the progress of a catalytically driven chemical process and the quality of the produced product. The chemical and physical changes occurring results in a change to the acoustic properties of the catalyst piezoelectric element combination. This is monitored by the propagation of an acoustic Love wave along the surface of the piezoelectric crystal element which is coated with the layer including a catalyst.

This invention provides a means of making a range of sensors capable of detecting a number of analytes within a waterborne environment and the progress of a chemical process and the quality of the product.

In one embodiment of the invention the layer of the absorbent material or catalyst may be directly coated on the surface of the piezoelectric element. In an alternative embodiment of the invention, the layer of the absorbent material or catalyst may be coated on the dielectric coating of the device disclosed in GB-A-9016177.9. In this alternative embodiment the apparatus includes a piezoelectric support including the region bearing electrode (S), a layer of dielectric material of thickness 0.5 to 2.0 microns covering the surface of the piezoelectric support including the region bearing the electrode and a layer of ion exchange absorbent material or a catalyst formed on said layer of dielectric material.

The apparatus of the present invention uses the surface guiding layer not only to confine the acoustic wave at the surface, but also as a sensing element. This is achieved by the layer which contains or consists of a zeolite material. Zeolites are a well defined class of crystalline alumino silicates, which have a three dimensional structure arising from a framework comprising [SiO4]⁴⁻ and [A1O4]⁵⁻ coordination polydedra linked at their corner. These crystalline networks are very open and contain cavities and channels of molecular dimensions (3-8A). These frameworks can be designed to selectively allow one or more components of a multi-component fluid phase to move through the zeolite structure while large molecules are excluded from the structure. Zeolites can be made highly specific for certain ions, particularly large metal ions and it is this feature which gives the sensor its selectivity for certain pollutants. Zeolite materials will change their mass and acoustic properties as a result of the specific absorption of such ions and this will be reflected in the acoustic signal by a change in phase or frequency. This approach, however, need not be limited only to zeolites. The surface thin film may be any material with selective ion exchange absorbance for certain materials in a fluid medium or the surface thin film may be any material which is used as a catalyst. Such a material may be organic or inorganic and will play the dual role of providing an acoustic guiding layer while changing its electrical/acoustic properties in response to one or more analytes in the fluid phase or in reponse to the chemical and physical changes of the surrounding media.

The zeolites play the dual role of both confining the acoustic wave at the crystal surface and of change its acoustic properties in the presence of the target analyte or during the chemical process. The Love wave created by the interaction of the surface skimming bulk wave and thin surface layer propogates to the sensor surface but does not propogate into the fluid medium.

Example of suitable piezoelectric materials include lithium tantalate and quartz. The piezoelectric material is preferably a single crystal cut in such a manner that waves polarised horizontally (ie in planes parallel to the surface of the support) are favoured. The thickness of the piezoelectric element is generally not critical but is typically of the order of 0.5mm for ease of handling. A reflecting lower surface could result in a plate-mode configuration which is not preferred. The element may alternatively comprise a slab of non-piezoelectric material with a thin layer of piezoelectric material coated on its surface. The apparatus embodying the invention is preferably a two-port waveguide sensor having spaced apart input and output electrodes. Alternatively, the apparatus may be a one-port resonator having a single electrode with a reflective metallic grating on either side. The gratings reflect the acoustic waves, a resonant cavity being formed between the gratings. Also the gratings effect mass loading of the surface. For this latter purpose, the grating may be included in the two-port device, between the input and output electrodes.

The electrode(s) may take any conventional form but are preferably photolithographically deposited on the surface as elongate regions of metallisation transverse to the direction of propagation of a wave along the surface of the piezoelectric element. The elongate metallised regions preferably have a width and spacing of the same order of magnitude, the width being typically between 1 and 40um, preferably between 10 and 20um.

The regions of metallisation forming the electrodes may be formed by the deposition of chromium on the surface of the element and the vapour deposition of gold onto the chromium, and thereafter by etching to the desired pattern.

The thickness of the electrode(s) is typically between 0.1 and 5um, preferably 0.2um.

The surface of the piezoelectric element opposite to the surface carrying the electrodes(s) is preferably coated or intimately contacted with a material having a good impedance match with the piezoelectric material and high acoustic absorption. This is to ensure that acoustic energy propagated through the piezoelectric material is not reflected back towards the active surface of the element. Suitable materials include plastics, wax and silicone rubber.

In the embodiment of this invention in which the dielectric layer is used, the dielectric layer may be formed of any suitable dielectric material that will have the property that the acoustic velocity in the dielectric is lower than that in the piezoelectric substrate. Example of suitable dielectric materials include silicon dioxide and certain polymer eg polymethyl methacrylate, polytetrafluoroethylkene, polystyrene and polyethylene. Where polymers are used, they are preferably cross-linked to reduce infiltration of the layer by water molecules from the sample under test. The optimum thickness of the dielectric layer will depend on numerous factors including the particular material used but in general satisfactory results are obtained with a layer of thickness 0.5 to 5um, typically 1 to 3um. The dielectric layer is mechanically stiff to couple to the motion of the support and sufficiently dense to minimise waves lost to the support. The dielectric layer is preferably derivatised or activated to facilitate immobilisation thereon of the layer of the ion exchange absorbent material or catalyst.

## Claims

1. An apparatus for monitoring a fluid medium comprising a piezoelectric element provided with a layer including an absorbent material or a catalyst material, means for generating an acoustic Surface Skimming Bulk Wave for propagation along said piezoelectric element, said layer being capable of confining said Wave to said element and being capable of changing its acoustic properties in response to absorption thereby and retention therein by chemical linkage of one or more analytes from the fluid medium or in response to chemical and/or physical changes in the fluid medium and means for monitoring changes in the propagated acoustic Wave caused by changes in the acoustic properties of said layer.

2. An apparatus as claimed in Claim 1, in which said absorbent material is an ion exchange material which forms the chemical linkage with selected analyte or analytes in the fluid medium.

3. An apparatus as claimed in Claim 1, in which said analyte or analytes are heavy metal ions.

4. An apparatus as claimed in any one of Claims 1 to 3, in which said absorbent material is zeolite material or derivitised polyester.

5. An apparatus as claimed in Claim 1, for monitoring a chemical reaction taking place in said fluid medium and in which said catalyst is selected to encourage said chemical reaction, the monitored changes in the propagated wave indicating the state of the catalyst.

6. An apparatus as claimed in Claim 1 or 4, in which the catalyst is a zeolite catalyst or a palladium matrix catalyst.

7. An apparatus as claimed in any one of the preceding claims, including a dielectric layer formed on a surface of said element, said layer of absorbent material or catalyst being formed on said layer of dielectric material.
